(19) Europäisches Patentamt
European Patent Office
Office européen des brevets

(11) **EP 1 375 570 B1**

(12) **EUROPÄISCHE PATENTSCHRIFT**

(45) Veröffentlichungstag und Bekanntmachung des Hinweises auf die Patenterteilung:
**12.12.2007   Patentblatt 2007/50**

(51) Int Cl.:
*C08J 5/18* *(2006.01)*          *B32B 27/36* *(2006.01)*

(21) Anmeldenummer: **03012258.4**

(22) Anmeldetag: **11.06.2003**

(54) **Mehrschichtige transparente Folie aus PET und PEN mit mindestens einer funktionellen Aussenschicht zur Herstellung von Verbundverpackungen mit UV-Schutz**

Multilayer transparent PET and PEN film having at least one functional outer layer for the manufacture of UV-protected composite packaging materials

Film multicouche transparent à base de PET et PEN comprenant au moins une couche extérieure fonctionelle pour la production de matériaux composites d'emballage protégés contre les rayonnements UV

(84) Benannte Vertragsstaaten:
**DE**

(30) Priorität: **20.06.2002   DE 10227440**

(43) Veröffentlichungstag der Anmeldung:
**02.01.2004   Patentblatt 2004/01**

(73) Patentinhaber: **Mitsubishi Polyester Film GmbH**
**65203 Wiesbaden (DE)**

(72) Erfinder:
 • **Kliesch, Holger, Dr.**
  **55252 Mainz (DE)**
 • **Murschall, Ursula, Dr.**
  **55283 Nierstein (DE)**
 • **Hora, Franz**
  **65830 Kriftel (DE)**
 • **Crass, Günther**
  **65232 Taunusstein (DE)**
 • **Peiffer, Herbert, Dr., Professor**
  **55126 Mainz (DE)**
 • **Kuhmann, Bodo**
  **65594 Runkel (DE)**

(74) Vertreter: **Schweitzer, Klaus et al**
**Zounek Plate Schweitzer**
**Patentanwaltskanzlei**
**Rheingaustrasse 196**
**65203 Wiesbaden (DE)**

(56) Entgegenhaltungen:
**EP-A- 0 839 854          EP-A- 0 849 075**
**WO-A-01/96107          WO-A-01/96114**

**Beschreibung**

Die Erfindung betrifft eine mehrschichtige, transparente Folie mit einer verringerten Durchlässigkeit für UV-Strahlung. Die Folie enthält sowohl Terephthalsäure- als auch Naphthalindicarbonsäureeinheiten sowie mindestens eine funktionelle Außenschicht. Die Erfindung betrifft ferner ein Verfahren zur Herstellung dieser Folie und ihre Verwendung in Verbund-Verpackungen mit verlängerter Shelflife.

Wichtige Kenngrößen für die Eignung einer Folie für die Verpackung von verderblichen Gütern sind die Sauerstoffbarriere und bei durchsichtigen Verpackungen zusätzlich ihre UV (ultravioletter Anteil des Lichtes)-Durchlässigkeit. Der zweite Punkt ist besonders bei Lebensmitteln von Bedeutung, die z. B. in Supermärkten in Theken präsentiert werden, die von Lampen mit relativ hoher UV-Emission bestrahlt werden. Bei zu hoher UV-Durchlässigkeit der Verpackung kann es hier zu unschönen Verfärbungen und Geschmacksveränderungen kommen.

Ein besonders wichtiges drittes Kriterium für die Eignung einer Verpackungsfolie ist ihr Preis, da im Endverbrauchermarkt auch kleinere Preisunterschiede die Kaufentscheidung zu einem günstigeren Produkt hin verschieben können, auch wenn die Verpackung hohen Qualitätsansprüchen an die Haltbarkeit nicht gerecht wird.

Bei den derzeit kommerziell erhältlichen Verpackungsfolien auf Polyesterbasis handelt es sich fast ausschließlich um Folien auf PET (Polyethylenterephthalat)-Basis, z. B. Hostaphan® RNK. Solche Folien sind zwar preisgünstig und besitzen in der Regel bereits eine für viele Anwendungen akzeptable Sauerstoffbarriere, die jedoch insbesondere bei durchsichtigen, unmetallisierten Verpackungen häufig nicht ausreicht. Außerdem besitzt PET eine noch relativ hohe UV-Lichtdurchlässigkeit.

Folien aus PEN (Polyethylennaphthalat) weisen eine wesentlich höhere Sauerstoffbarriere auf und haben außerdem eine geringere UV-Durchlässigkeit, sind aber aufgrund des hohen Preises von PEN unwirtschaftlich und werden daher in der Praxis kaum verwendet.

Dieses Problem kann zwar teilweise durch die Verwendung von Mehrschichtfolien reduziert werden, welche eine oder mehrere PEN-Schichten auf einer PET-Basis enthalten (z.B. DE-A-197 20 505 oder WO 01/96114). Diese Folien haben jedoch Probleme mit der Delamination der Schichten aus den unterschiedlichen Polyestern und sind in der Produktion schwieriger herzustellen. Außerdem kann das anfallende Regenerat nicht mehr zum gleichen Wert wiederverwendet werden, da sich PET und PEN bei der Regenerierung mischen und so nicht mehr zur Erzeugung der teuren 100 Gew.-% oder nahezu 100 Gew.-% PEN-Schichten herangezogen werden können, sondern nur noch das vergleichsweise billige PET ersetzen. Aus diesen Gründen sind solche Folien zwar billiger als Folien, die zum überwiegenden Teil aus PEN bestehen, sind aber erheblich teurer als Standard-PET-Verpackungsfolien und kommen daher nur in Nischenmärkten mit besonderen Ansprüchen zum Einsatz.

Folien aus Blends von PET und PEN sind ebenfalls beschrieben (z. B. GB-A-2 344 596), es fehlen hier jedoch die Hinweise, wie sich aus diesen Blends eine Folie mit verbesserter UV- und Sauerstoffbarriere herstellen lässt, die zur Produktion von transparenten Verpackungen mit erhöhter Shelflife eingesetzt werden kann. Auch fehlen Hinweise darauf, welche PET/PEN-Mengenverhältnisse sich für die Herstellung von Folien mit guter Sauerstoff- und UV-Barriere eignen.

Ein weiteres wichtiges Kriterium für die Eignung einer Folie für Verbundverpackungen ist das Vorhandensein von funktionellen Oberflächen. Häufig werden in der industriellen Praxis siegelfähige, matte, einseitig glatte (verhindert das Verrutschen von Verpackungen gegeneinander) oder glänzende Folien verlangt. Solche Oberflächen lassen sich am besten durch koextrudierte Folien erreichen, die eine funktionelle Deck(= Außen)schicht aufweisen. Solche Folien sind hinreichend beschrieben.

Dennoch fehlt hier der Hinweis, wie sich daraus eine Verbundverpackung herstellen lässt, die das Füllgut vor UV-Licht schützt.

Die UV-Durchlässigkeit von Polyesterfolien kann ganz allgemein auch durch den Zusatz von UV-Stabilisatoren/Absorbern wie z. B. Tinuvin® (Ciba Specialities, Schweiz) verbessert werden. Die Verwendung solcher Verbindungen ist aber ebenfalls mit relativ hohen Kosten verbunden und bringt je nach verwendetem Stabilisator auch Probleme in der Eignung für den direkten Lebensmittelkontakt.

Aufgabe der vorliegenden Erfindung war es, eine Folie mit gegenüber reinen PET-Folien verbesserter Sauerstoff- und UV-Barriere zur Verfügung zu stellen, die sich kostengünstig produzieren lässt und für Verpackungsanwendungen geeignet ist, die auch bei höheren UV-Dosen eine gegenüber PET-Folien enthaltenden Verpackungen verbesserte Lebensdauer des verpackten Gutes gewährleisten.

Gelöst wird dies durch eine mindestens zweischichtige Polyesterfolie mit einer Gesamtdicke von 5 bis 200 $\mu$m, bevorzugt 6 bis 50 $\mu$m und besonders bevorzugt 8 bis 14 $\mu$m, die neben Polyethylenterephthalat 2 bis 20 Gew.-%, bevorzugt 4 - 16 Gew.-% und besonders bevorzugt 6 - 12 Gew.-%, Polyethylennaphthalat (bezogen auf die Masse der Gesamtfolie) enthält, wobei der Polyethylennaphthalat-Gehalt in jeder Schicht einen Gehalt von 25 Gew.% nicht überschreitet, sowie mindestens eine funktionelle Außenschicht, wobei die funktionelle Außenschicht oder die funktionellen Außenschichten eine zusätzliche Funktionalität aufweist/aufweisen, die ausgewählt ist aus: siegelfähig, matt, glänzend, antiblock.

Weiter betrifft die Erfindung Verpackungen, die aus diesen Polyesterfolien hergestellt werden. Es ist dabei unwichtig, wie sich das Polyethylennaphthalat auf die einzelnen Schichten verteilt, solange der Anteil an Polyethylennaphthalat in jeder Schicht einen Gehalt von 25 Gew.-% nicht überschreitet, da sonst eine ausreichende Kristallisierbarkeit bzw. Orientierung der Folie nicht gewährleistet ist.

Überraschenderweise reichen die erfindungsgemäß niedrigen PEN-Gehalte sowohl bei der Herstellung der Folie aus Mischungen von PET- und PEN-Chips (Blockcopolymere) als auch bei der Verwendung statistischer Copolymere aus, um - im Vergleich zu Verpackungen aus herkömmlichen PET-Folien - eine deutliche Verlängerung der Lebensdauer von Lebensmitteln, die mit diesen Folien verpackt wurden, zu erreichen. Die erreichbare Verbesserung ist dabei abhängig von der Menge an PEN und der Foliendicke. So reichen für eine 50 bis 200 $\mu$m dicke Folie 3 bis 8 Gew.-% PEN aus, um während einer Lagerung von einem Monat unter den in herkömmlichen Kühltheken in Supermärkten herrschenden UV-Intensitäten eine Verfärbung des gefüllten Fleisches bzw. sonstigen Füllgutes zu verhindern. Bei Folien zwischen 8 und 24 $\mu$m sind für ähnlich gute Resultate 5 bis 16 Gew.-% PEN nötig. Die erfindungsgemäßen Folien weisen eine Transmission bei 330 nm von kleiner 25 % und bevorzugt von kleiner 10 % auf. Bei 350 nm weisen die erfindungsgemäßen Folien eine Transmission von kleiner 25 % und bevorzugt von kleiner 10 % auf.

PEN-Konzentrationen höher als der erfindungsgemäße Bereich führen zu einer reduzierten bis schließlich ausbleibenden Kristallisationsneigung. Dies führt wiederum zu einer deutlichen Abnahme der Sauerstoff- und Wasserdampfbarriere und zu einer deutlichen Verschlechterung der Verarbeitungseigenschaften. Für das Erreichen einer ausreichenden Sauerstoff-Barriere von kleiner 100 $\{cm^3/(m^2 \cdot d \cdot bar)\} \cdot \{$Foliendicke $[\mu m]/12 \, [\mu m]\}$ bzw. bevorzugt von kleiner 97 $\{cm^3/(m^2 \cdot d \cdot bar)\} \cdot \{$Foliendicke $[\mu m]/12 \, [\mu m]\}$ und besonders bevorzugt von kleiner 95 $\{cm^3/(m^2 \cdot d \cdot bar)\} \cdot \{$Foliendicke $[\mu m]/12 \, [\mu m]\}$ ist es daher auch vorteilhaft, wenn im DSC (Digital Scanning Calorimeter) unter den in Messmethoden beschriebenen Bedingungen mindestens ein Schmelzpeak zwischen 230 und 270 °C und bevorzugt zwischen 240 und 265 °C auftritt.

Für das Erreichen der genannten Barriere ist es weiterhin günstig, wenn die PEN-Konzentration der Folie bei mindestens 5 Gew.-% liegt.

Neben den genannten Anteilen an PEN enthält die erfindungsgemäße Folie als Hauptbestandteil PET, d. h. Polyethylenterephthalat. Neben Terephthalsäure (TPA) und den erfindungsgemäßen Mengen an 2,6-Naphthalindicarbonsäure (NDA) als Monomere kann die Folie 0 bis 20 Gew.-% (bevorzugt 0,5 bis 2,5 Gew.-%) Isophthalsäure enthalten, wobei sich überraschenderweise gezeigt hat, dass ein Gehalt von 0,5 bis 2,5 Gew.-% Isophthalsäure (IPA) zu einer weiteren Verbesserung der Sauerstoffbarriere von 2 bis 5 % führt. Neben den genannten Dicarbonsäuren sind selbstverständlich auch ihre Dimethylester geeignete Monomere. Andere Dicarbonsäuren bzw. Dimethylester wie z. B. 1,5-Naphthalindicarbonsäure sollten einen Anteil von 6 Gew.-%, bevorzugt 2 Gew.-%, nicht überschreiten.

Das Hauptmonomer der Diolkomponente ist Ethylenglycol (EG). Im Gegensatz zu dem genannten positiven Effekt von IPA verringert sich die Barriere mit steigendem Diethylenglycolanteil (DEG). Daher sollte der DEG-Anteil 3 Gew.-% nicht überschreiten und liegt idealerweise zwischen 0,5 und 1,5 Gew.-%. Andere Comonomeren-Diole wie z. B. Cyclohexandimethanol, 1,3 Propandiol, 1,4-Butandiol sollten einen Anteil von 5 Gew.-% nicht überschreiten und liegen bevorzugt bei einem Anteil von weniger als 3 Gew.-%. Alle diese Angaben beziehen sich genauso wie der Gehalt an PEN auf das Gesamtgewicht der Folie. Die funktionellen Deckschichten enthalten für sich betrachtet je nach Funktionalität andere Gehalte an Monomeren.

Für den Fall, dass die erfindungsgemäße Folie Regenerate (= aus Produktionsabfall hergestellter Polymerrohstoff) aus anderen Anwendungen (d. h. Folienproduktion, bei der eine andere Folie für einen anderen Anwendungszweck hergestellt wird) enthält, hat es sich als zweckmäßig erwiesen, ihr mindestens einen optischen Aufheller hinzuzugeben. Diese optischen Aufheller sind in der Lage, UV-Strahlen im Wellenlängenbereich von ca. 360 bis 380 nm zu absorbieren und als längerwelliges, sichtbares blauviolettes Licht wieder abzugeben. Geeignete optische Aufheller sind Bis-benzoxazole, Phenylcumarine und Bis-styrylbiphenyle, insbesondere Phenylcumarin, besonders bevorzugt Triazinphenylcumarin (Tinopal®, Ciba-Geigy, Basel, Schweiz). Sofern zweckmäßig, können neben dem optischen Aufheller auch noch in Polyester lösliche blaue Farbstoffe zugesetzt werden. Als geeignete blaue Farbstoffe haben sich Kobaltblau, Ultramarinblau und Anthrachinonfarbstoffe, insbesondere Sudanblau 2 (BASF, Ludwigshafen, Bundesrepublik Deutschland), erwiesen. Die optischen Aufheller werden in Mengen von 10 ppm bis 50.000 ppm, insbesondere 20 ppm bis 30.000 ppm, besonders bevorzugt 50 ppm bis 25.000 ppm, bezogen auf das Gewicht der auszurüstenden Schicht, eingesetzt. Die blauen Farbstoffe werden in Mengen von 10 ppm bis 10.000 ppm, insbesondere 20 ppm bis 5.000 ppm, besonders bevorzugt 50 ppm bis 1.000 ppm, bezogen auf das Gewicht der auszurüstenden Schicht, eingesetzt.

Die erfindungsgemäße Folie ist mindestens zweischichtig. Im einfachsten Fall umfasst die Erfindung Aufbauten aus einer Basisschicht (B) und einer funktionellen Deckschicht (A), wobei als Deckschicht die äußerste, freiliegende Außenschicht einer Mehrschichtfolie gemeint ist. Bevorzugt sind weiterhin Folien mit einer Basisschicht (B) und jeweils einer funktionellen Deckschicht (A) auf jeder Oberfläche der Basisschicht (B). Bevorzugt sind weiterhin Folien mit einer Basisschicht (B) und einer funktionellen Deckschicht (A) und einer weiteren Deckschicht (C) auf der der Deckschicht (A) gegenüberliegenden Seite der Basisschicht (B). Die Dicke der Deckschicht/en wird unabhängig von den anderen Schichten gewählt und liegt bevorzugt im Bereich von 0,1 bis 10 $\mu$m, insbesondere 0,2 bis 5 $\mu$m, vorzugsweise 0,3 bis

2 μm, wobei beidseitig aufgebrachte Deckschichten bezüglich Dicke und Zusammensetzung gleich oder verschieden sein können. Die Dicke der Basisschicht ergibt sich entsprechend aus der Differenz von Gesamtdicke der Folie und der Dicke der aufgebrachten Deck- und Zwischenschicht/en und kann daher analog der Gesamtdicke innerhalb weiter Grenzen variieren. Generell ist die Basisschicht entweder die dickste aller vorhandenen Schichten oder die am weitesten innen liegende Schicht. Nur sofern sich auf einer oder beiden Oberflächen einer solchen Basisschicht keine weitere(n) Deckschicht(en) mehr befindet(n), kann diese auch 'Außenschicht' sein.

In einer bevorzugten Ausführungsform ist die funktionelle Deckschicht A siegelfähig.

Die zweckmäßigerweise durch Koextrusion auf die Basisschicht B aufgebrachte siegelfähige Deckschicht A kann beispielsweise auf Basis von Polyestercopolymeren aufgebaut sein. Bevorzugt im Sinne der Erfindung sind dabei zwei Varianten:

a: Copolyester aus Terephthalsäure und Isophthalsäure
b: Copolyester aus Terephthalsäure und Naphthalindicarbonsäure

Variante a:

Die siegelfähige Deckschicht besteht im wesentlichen aus Copolyestern, die überwiegend aus Isophthalsäure- und Terephthalsäure-Einheiten und aus Ethylenglykol-Einheiten zusammengesetzt sind. Die restlichen Monomereinheiten stammen aus anderen aliphatischen, cycloaliphatischen oder aromatischen Diolen bzw. Dicarbonsäuren wie sie auch in der Basisschicht vorkommen können. Die bevorzugten Copolyester, die die gewünschten Siegeleigenschaften bereitstellen, sind solche, die aus Ethylenterephthalat- und Ethylenisophthalat-Einheiten aufgebaut sind. Der Anteil an Ethylenterephthalat beträgt 40 bis 95 Mol-% und der entsprechende Anteil an Ethylenisophthalat 60 bis 5 Mol-%. Bevorzugt sind Copolyester, bei denen der Anteil an Ethylenterephthalat 50 bis 90 Mol-% und der entsprechende Anteil an Ethylenisophthalat 50 bis 10 Mol-% beträgt, und ganz bevorzugt sind Copolyester, bei denen der Anteil an Ethylenterephthalat 60 bis 85 Mol-% und der entsprechende Anteil an Ethylenisophthalat 40 bis 15 Mol-% beträgt.

Variante b:

Die siegelfähige Deckschicht besteht im wesentlichen aus Copolyestern, die überwiegend aus Naphthalindicarbonsäure- und Terephthalsäure-Einheiten und aus Ethylenglykol-Einheiten zusammengesetzt sind. Die restlichen Monomereinheiten stammen aus anderen aliphatischen, cycloaliphatischen oder aromatischen Diolen bzw. Dicarbonsäuren wie sie auch in der Basisschicht vorkommen können. Die bevorzugten Copolyester, die die gewünschten Siegeleigenschaften bereitstellen, sind solche, die aus Ethylenterephthalat- und Ethylennaphthalat-Einheiten aufgebaut sind.

Sollte der Gehalt an PEN in der Siegelschicht nicht ausreichen, um den erfindungswesentlichen Gesamtgehalt der Folie an PEN zu erreichen, so sollte der fehlende PEN-Anteil der Basisschicht oder einer weiteren gegebenenfalls vorhandenen Deckschicht C hinzugefügt werden. Die gegebenenfalls vorhandene, der Siegelschicht gegenüberliegende weitere Deckschicht C sollte jedoch zweckmäßigerweise weniger als 2 Gew.-% PEN enthalten, um ein unbeabsichtigtes Siegeln mit der C-Seite zu verhindern.

Die Varianten a und b können miteinander kombiniert werden. Die Mindestmengen an Isophthalsäure bzw PEN lassen sich dadurch verringern. Es hat sich bei PET/PEN/IPA-Siegelschichten jedoch als günstig erwiesen, wenn der PEN-Anteil der Siegelschicht A bei mindestens 15 Gew.-% und der Isophthalsäureanteil bei mindestens 5 Gew.-% liegt.

Zur Erzielung eines besonders bevorzugten Eigenschaftsprofils der Folie weist die siegelfähige Folie eine Deckschicht C auf, die mehr Partikel (d. h. eine höhere Partikelkonzentration) als die siegelfähige Deckschicht A enthält. Die Partikelkonzentration in dieser zweiten Deckschicht C liegt zwischen 0,1 und 1,0 Gew.-%, vorteilhaft zwischen 0,12 und 0,8 Gew.-% und insbesondere zwischen 0,15 und 0,6 Gew.-%. Die andere der Deckschicht C gegenüberliegende siegelfähige Deckschicht A ist dagegen weniger mit Partikeln gefüllt. Die Konzentration der Partikel in der Schicht A liegt zwischen 0,01 und 0,2 Gew.-%, vorzugsweise zwischen 0,015 und 0,15 Gew.-% und insbesondere zwischen 0,02 und 0,1 Gew.-%.

Die verwendeten Partikel sind z. B. anorganische Partikel wie Kaolin, Talk, $SiO_2$, $MgCO_3$, $CaCO_3$, $BaCO_3$, $CaSO_4$, $BaSO_4$, $Li_3PO_4$, $Ca_3(PO_4)_2$, $Mg_3(PO_4)_2$, $TiO_2$, $Al_2O_3$, $MgO$, $SiC$, $LiF$ oder die Ca-, Ba-, Mn-Salze der für die Polyester der Schicht verwendeten aromatischen Dicarbonsäuren. Es können allerdings auch Teilchen auf Basis vernetzter, unschmelzbarer, organischer Polymerer wie z. B. Polystyrole, Polyacrylate, Polymethacrylate zugesetzt werden.

In einer weiteren bevorzugten Ausführungsform ist die funktionelle Deckschicht A matt.

Die Mattigkeit der Deckschicht A kann prinzipiell auf mehrere verschiedene Weisen erreicht werden. In einer bevorzugten Ausführungsform enthält die Deckschicht, bezogen auf ihr Gewicht, zwischen 0,5 und 10 Gew.-% (bevorzugt 2 bis 8 Gew.-% und besonders bevorzugt 3 bis 6 Gew.-%) eines Partikels mit einem $d_{50}$-Wert zwischen 1 und 10 μm,

bevorzugt zwischen 2 und 8 $\mu$m und besonders bevorzugt zwischen 3 und 6 $\mu$m. Geeignete Partikel sind die oben für die siegelfähigen Deckschichten beschriebenen. Neben diesen groben Partikeln können weitere Partikel derselben Art, aber mit einem $d_{50}$-Wert < 1 $\mu$m zugegeben werden. Es hat sich als günstig erwiesen, wenn die matte Deckschicht neben PET und gegebenenfalls PEN weitere Monomere enthält. Besonders günstig sind dabei Isophthalsäuregehalte zwischen 1 und 10 Gew.-% bzw. Diethylenglycol-Gehalte zwischen 1 und 5 Gew.-% oder Butandiolgehalte zwischen 1 und 6 Gew.-% oder Propandiolgehalte zwischen 1 und 6 Gew.-% oder Kombinationen aus einem oder mehreren dieser Monomere. In einer weiteren bevorzugten Ausführungsform enthält die matte Deckschicht ein Blend oder eine Mischung aus zwei Komponenten (I) und (II) und gegebenenfalls zugesetzte Additive in Form von Partikeln wie sie oben für die siegelfähigen Deckschichten beschrieben sind.

Die Komponente (I) der Mischung oder des Blends ist ein Ethylenterephthalat-Homopolymer oder Ethylenterephthalat-Copolymer oder eine Mischung aus Ethylenterephthalat-Homo- oder -Copolymeren.

Die Komponente (II) der Mischung oder des Blends ist ein Ethylenterephthalat-Copolymer, welches aus dem Kondensationsprodukt der folgenden Monomeren bzw. deren zur Bildung von Polyestern befähigten Derivaten besteht:

65 bis 95 Mol-%    Isophthalsäure;

0 bis 30 Mol-%    wenigstens einer aliphatische Dicarbonsäure mit der Formel $HOOC(CH_2)_nCOOH$, wobei n im Bereich von 1 bis 11 liegt;

5 bis 15 Mol-%    wenigstens eines Sulfomonomeren, enthaltend eine Alkalimetallsulfonatgruppe an dem aromatischen Teil einer Dicarbonsäure;

die zur Bildung von 100 Mol-% Kondensat notwendige stöchiometrische Menge eines copolymerisierbaren aliphatischen oder cycloaliphatischen Glykols mit 2 bis 11 Kohlenstoffatomen;

wobei die Prozentangaben jeweils bezogen sind auf die Gesamtmenge der die Komponente (II) bildenden Monomeren. Zur ausführlichen Beschreibung der Komponente (II) wird auf den Inhalt der EP-A-0 144 878 verwiesen, auf die hier ausdrücklich Bezug genommen wird.

Unter Mischungen im obigen Sinne sind mechanische Mischungen zu verstehen, welche aus den Einzelkomponenten hergestellt werden. Im allgemeinen werden hierzu die einzelnen Bestandteile als gepresste Formkörper kleiner Größe, z. B. linsen- oder kugelförmiges Granulat, zusammengeschüttet und mit einer geeigneten Rüttelvorrichtung mechanisch miteinander gemischt. Eine andere Möglichkeit für die Erstellung der Mischung besteht darin, dass die jeweiligen Komponenten (I) und (II) in Granulatform jeweils für sich getrennt dem Extruder für die Deckschicht zugeführt werden und die Mischung im Extruder bzw. in den nachfolgenden schmelzeführenden Systemen durchgeführt wird.

Ein Blend im obigen Sinne ist ein legierungsartiger Verbund der einzelnen Komponenten (I) und (II), der nicht mehr in seine ursprünglichen Bestandteile zerlegt werden kann. Ein Blend weist Eigenschaften wie ein homogener Stoff auf und kann entsprechend durch geeignete Parameter charakterisiert werden.

Das Verhältnis (Gewichtsverhältnis) der beiden Komponenten (I) und (II) der Mischung für die Deckschicht bzw. des Blends kann innerhalb weiter Grenzen variieren und richtet sich nach dem beabsichtigten Einsatzzweck der Mehrschichtfolie. Bevorzugt liegt das Verhältnis der Komponenten (I) und (II) in einem Bereich von (I):(II) =10:90 bis (I):(II) = 95:5, vorzugsweise von (I):(II) = 20:80 bis (I):(II) = 95:5 und insbesondere von (I):(II) =30:70 bis (I):(II) =95:5.

Die matte Deckschicht A wird in einer bevorzugten Ausführungsform durch den folgenden Satz von Parametern gekennzeichnet:

- Die Rauigkeit der matten Deckschicht A, ausgedrückt als $R_a$-Wert, liegt im Bereich von 200 bis 1000 nm, bevorzugt von 220 bis 950 nm und besonders bevorzugt von 250 bis 900 nm. Kleinere Werte als 200 nm haben negative Auswirkungen auf den Mattheitsgrad der Oberfläche, während größere Werte als 1000 nm die optischen Eigenschaften der Folie beeinträchtigen;

- Der Messwert der Oberflächengasströmzeit (s. Messmethoden) sollte im Bereich von 0 bis 50 s, vorzugsweise von 1 bis 45 s, liegen. Bei Werten oberhalb von 50 s wird der Mattigkeitsgrad der Folie negativ beeinflusst.

In einer weiteren bevorzugten Ausführungsform ist die funktionelle Deckschicht A glänzend und weist einen niedrigen $R_a$-Wert auf.

In der Ausführungsform mit hohem Glanz weist die funktionelle Deckschicht A einen hohen Glanz von > 180, bevorzugt > 190 und besonders bevorzugt > 200, bei einem Messwinkel von 20° (gemessen nach DIN 67 530 (s. Messmethoden)) auf. Die funktionelle Deckschicht A weist weiterhin einen $R_a$-Wert (s. Messmethoden) von < 100, bevorzugt < 60 und besonders bevorzugt < 40 nm, auf. Erreicht werden diese Glanz- und Rauheitswerte dadurch, dass die Deckschicht A einen besonders niedrigen Anteil an Partikeln mit einem $d_{50}$ > 0,5 $\mu$m enthält. Dieser ist bevorzugt kleiner 3000 ppm. Der Anteil von Partikeln mit einem $d_{50}$ > 2 $\mu$m liegt dabei in der Deckschicht A bei kleiner 1000 ppm, bevorzugt < 500 ppm und besonders bevorzugt bei < 250 ppm. Zur Erzielung eines besonders bevorzugten Eigenschaftsprofils der Folie weist die glänzende Folie neben der Deckschicht A eine Deckschicht C auf, die mehr Partikel (d. h. höhere Partikelkonzentration) als die glänzend Deckschicht A enthält. Die Partikelkonzentration in dieser zweiten Deckschicht C liegt zwischen 0,1 und 1,0 Gew.-%, vorteilhaft zwischen 0,12 und 0,8 Gew.-% und insbesondere zwischen 0,15 und 0,6 Gew.-%. Der Anteil an Partikeln mit einem $d_{50} > 2 \mu m$ liegt dabei in der Deckschicht C bei größer 250 ppm, bevorzugt > 500 und besonders bevorzugt bei > 750 ppm. Verwendbare Partikel sind wiederum die oben für die siegelfähigen Deckschichten genannten Partikel.

In einer weiteren bevorzugten Ausführungsform ist die funktionelle Deckschicht A mit Partikeln ausgerüstet, die zu einem $R_a$-Wert dieser Schicht von größer 40 nm führen und die deshalb als 'antiblockierend' bezeichnet werden. Die Oberflächengasströmzeit der Folie auf der Seite der Deckschicht A ist kleiner als 500 s, bevorzugt < 400 s und besonders bevorzugt < 300 s. Dies wird erreicht, indem die Deckschicht A Partikel in einer Konzentration von 0,05 bis 1,0 Gew.-% enthält. Der Gehalt an Partikeln mit einem $d_{50} > 1 \mu m$ liegt dabei mindestens bei 0,005 Gew.-%, bevorzugt bei 0,05 bis 0,15 Gew.-%. Die verwendeten Partikel sind wiederum die oben für die siegelfähigen Deckschichten genannten.

In einer besonders bevorzugten Ausführungsform der antiblockierend ausgerüsteten Folie liegt der Aschegehalt (Bestimmung s. Messmethoden) der Folie bei < 0,2 Gew.-%, bevorzugt < 0,18 Gew.-%, besonders bevorzugt < 0,15 Gew.-%, da sonst die Trübung unangemessen hoch liegt.

Die erfindungsgemäße Folie kann auch mindestens einseitig mit einer Beschichtung, beispielsweise mit einem Copolyester oder mit einem Haftvermittler, versehen sein.

In einer weiteren Ausführungsform für Anwendungen mit besonders hohen Ansprüchen an die Barriere wird die Folie mit einer Metall(Halbmetall)oxydschicht wie z. B. $Al_2O_x$ oder $SiO_x$ bedampft.

Der Polyesterrohstoff für die Basisschicht enthält gegebenenfalls ebenfalls Partikel wie sie oben für die Siegelfähigen Deckschichten angegeben sind. Bevorzugt werden die Partikel in einer Konzentration von 0,005 bis 10,0 Gew.-%, besonders bevorzugt in einer Konzentration von 0,01 bis 0,5 Gew.-%, eingesetzt. Die durchschnittliche Teilchengröße beträgt 0,001 bis 10 $\mu m$, bevorzugt 0,005 bis 3 $\mu m$.

Die Herstellung der Polyester, die für die erfindungsgemäßen Folien verwendet werden, kann sowohl nach dem Umesterungsverfahren mit den üblichen Katalysatoren wie z. B. Zn-, Ca-, Li- und Mn-Salzen oder nach dem Direktveresterungsverfahren erfolgen.

Die Standardviskosität SV (DCE) des eingesetzten Polyesterrohstoffs, gemessen in Dichloressigsäure nach DIN 53728, liegt zwischen 400 und 1200, vorzugsweise zwischen 700 und 900.

In einer bevorzugten Ausführungsform wird der Folie der PEN-Anteil oder ein Teil des PEN-Anteils zugeführt, indem ein Regenerat aus einer anderen PEN-Anwendung zudosiert wird. Dies kann z. B. Regenerat aus der PEN-Kondensatorfolienproduktion sein (in der Regel 100 Gew.-% PEN) oder besonders bevorzugt eine Regenerat aus einer Anwendung, bei der wie eingangs erwähnt eine oder mehrere PEN-Schichten auf einer PET-Basis verwendet werden. Es hat sich gezeigt, dass die Laufsicherheit bei Verwendung eines solchen Regenerats besonders gut ist, da hier PET und PEN bereits vorgemischt sind und es so zu einer besseren Verstreckbarkeit kommt. Bei Verwendung von reinem PEN-Regenerat hat es sich als günstig erwiesen, wenn dieses nicht - wie sonst vor dem Wiedereinsatz üblich - festphasenkondensiert wird. Neben diesem Fremdregenerat enthält die Folie noch bis zu 65 Gew.-% eigenes Regenerat oder Regenerat aus anderen PET-Folienanwendungen, wobei es sich als günstig für die Prozessstabilität erwiesen hat, wenn die Folie mindestens 20 Gew.-% eigenes Regenerat enthält (da dann PET/PEN bereits gut gemischt).

Die Erfindung betrifft weiterhin ein Verfahren zur Herstellung der erfindungsgemäßen Polyesterfolie nach dem an sich bekannten Extrusions- oder Koextrusionsverfahren.

Im Rahmen dieses Verfahrens wird so vorgegangen, dass die den einzelnen Schichten der Folie entsprechenden Schmelzen durch eine Flachdüse koextrudiert werden, die so erhaltene Folie zur Verfestigung auf einer oder mehreren Walze/n abgezogen wird, die Folie anschließend biaxial gestreckt (orientiert), die biaxial gestreckte Folie thermofixiert und gegebenenfalls an der zur Behandlung vorgesehenen Oberflächenschicht corona- oder flammbehandelt wird.

Die biaxiale Streckung wird im allgemeinen sequentiell durchgeführt. Dabei wird vorzugsweise zuerst in Längsrichtung (d. h. in Maschinenrichtung = MD-Richtung) und anschließend in Querrichtung (d. h. senkrecht zur Maschinenrichtung = TD-Richtung) gestreckt. Dies führt zu einer Orientierung der Molekülketten des Polyesters. Das Strecken in Längsrichtung erfolgt bevorzugt mit Hilfe zweier entsprechend dem angestrebten Streckverhältnis mit unterschiedlichen Geschwindigkeiten rotierender Walzen. Zum Querstrecken benutzt man allgemein einen entsprechenden Kluppenrahmen.

Die Temperatur, bei der die Streckung durchgeführt wird, kann in einem relativ großen Bereich variieren und richtet sich nach den gewünschten Eigenschaften der Folie. Im allgemeinen wird die Längsstreckung bei 80 bis 130 °C, bevorzugt bei 90 bis 120 °C, besonders bevorzugt bei 100 bis 110 °C, und die Querstreckung bei 90 bis 150 °C, bevorzugt bei 90 bis 120 °C, besonders bevorzugt bei 100 bis 110 °C, durchgeführt. Das Längsstreckverhältnis liegt allgemein im Bereich von 2,5:1 bis 6:1, bevorzugt von 3:1 bis 5,5:1. Das Querstreckverhältnis liegt allgemein im Bereich von 3,0:1 bis 5,0:1, bevorzugt von 3,5:1 bis 4,5:1.

Die Streckung kann auch in einem Simultanstreckrahmen (Simultanstreckung) erfolgen, wobei die Anzahl der Streckschritte und die Abfolge (längs/quer) nicht von entscheidender Bedeutung für das Eigenschaftsbild der Folie ist. Die Streckverhältnisse entsprechen denen im herkömmlichen sequentiellen Prozess.

Bei der nachfolgenden Thermofixierung wird die Folie etwa 0,1 bis 10 s lang bei einer Temperatur von 150 bis 250 °C, bevorzugt von 190 bis 240 °C, besonders bevorzugt von 210 bis 230 °C, gehalten. Anschließend wird die Folie abgekühlt und dann in üblicher Weise aufgewickelt. Zur Einstellung weiterer gewünschter Eigenschaften kann die Folie allerdings vor dem Aufwickeln noch chemisch behandelt werden oder auch corona- bzw. flammbehandelt sein. Die Behandlungsintensität wird so eingestellt, dass die Oberflächenspannung der behandelten Folie bei größer/gleich 45 mN/m liegt.

Ebenso kann die Folie zur Einstellung weiterer Eigenschaften beschichtet werden. Typische Beschichtungen sind haftvermittelnde, antistatisch, schlupfverbessernd oder dehäsiv wirkende Schichten. Es bietet sich an, diese zusätzlichen Schichten über In-line-Beschichtung mittels wässriger Dispersionen nach der Längs- und vor der Querstreckung auf die Folie aufzubringen.

Der letztlich für Verpackungszwecke eingesetzte Folienverbund enthält neben der erfindungsgemäßen Folie (= Folie I) je nach Verwendungszweck weitere Folien (= Folie II), beispielsweise Folien aus PET oder aus einem orientierten Polyamid (oPA) oder Polyethylen (PE)- bzw Polypropylen (PP)-Siegelfolien, oder die Folie oder der Verbund kann zur Steuerung der Siegeleigenschaften mit einer Siegelschicht aus beispielsweise PP oder PE beschichtet sein. Das Zusammenfügen der einzelnen Folien zu einem Folienverbund erfolgt bevorzugt mittels Kaschierklebern, z. B. auf der Basis von Polyurethan.

Die letztlich zum Einsatz kommende Verpackung besteht dann entweder aus dem mit sich selbst gesiegelten Verbund (Beutelverpackung), oder der Verbund wird als "Deckel" auf eine Unterlage (Tray) aufgebracht. Bei der zweiten Möglichkeit ist zu beachten, das der Tray, falls transparent, ebenfalls eine geringe UV-Durchlässigkeit aufweisen sollte, was z. B. durch Aufkaschieren der erfindungsgemäßen Folie erreicht werden kann. Transparente Laminate oder Verbunde sind beispielsweise in DE-A-33 00 411 und DE-A-26 44 209 beschrieben.

Die Gesamtdicke der erfindungsgemäßen Verbundfolie, die sich mindestens aus der erfindungsgemäßen Folie I und einer Folie II zusammensetzt, kann innerhalb weiter Grenzen variieren und richtet sich nach dem Einsatzzweck. Bevorzugt haben die erfindungsgemäßen Verbundfolien eine Dicke im Bereich von 9 bis 1200 $\mu$m, insbesondere von 10 bis 1000 $\mu$m, besonders bevorzugt von 20 bis 800 $\mu$m.

Die Folie II der erfindungsgemäßen Verbundfolie kann eine Thermoplastfolie und/oder eine Standardthermoplastfolie und/oder eine Polyolefinfolie und/oder die erfindungsgemäße Folie I sein. Diese zweite Folie wird bevorzugt auf die Seite der Folie I aufgebracht, die eine zusätzliche Funktionalität aufweist ($SiO_x$-Beschichtung, Corona- und/oder Flammbehandlung und/oder Haftvermittler und/oder Copolyester und/oder $Al_2O_x$-Beschichtung und/oder Druckfarben, um nur einige zu nennen), kann aber auch auf die Folienseite aufgebracht werden, die keine Funktionalität ausweist.

Die Folie II kann einschichtig oder mehrschichtig und kann wie Folie I durch Verstrecken orientiert worden sein und kann mindestens eine Siegelschicht haben. Die zweite Folie kann mit oder ohne Klebstoff mit Folie I gemäß der Erfindung verbunden sein.

Die Dicke dieser Folie II liegt im allgemeinen zwischen 4 und 700 $\mu$m.

Die Verbundfolien erhält man im allgemeinen durch Aufeinanderlaminieren oder Kaschieren mindestens der eingesetzten Folien I und II mit oder ohne dazwischen liegender Klebstoffschicht, indem man diese zwischen auf 30 bis 90 °C temperierten Walzen durchleitet.

Es ist aber beispielsweise auch möglich, die Folie II durch In-line-Beschichtung (Schmelzextrusion) auf die bestehende Folie I aufzubringen.

Bei Verwendung von Klebstoffen werden diese auf eine Folienoberfläche der Folie I und/oder der Folie II nach bekannten Verfahren aufgebracht, insbesondere durch Auftragen aus Lösungen oder Dispersionen in Wasser oder organischen Lösungsmitteln. Die Lösungen haben hierbei gewöhnlich eine Klebstoffkonzentration von 5,0 bis 40,0 Gew.-%, um auf der Folie I und/oder II eine Klebstoffmenge von 1,0 bis 10,0 g/m$^2$ zu ergeben.

Als besonders zweckmäßig haben sich Klebstoffe erwiesen, die aus thermoplastischen Harzen wie Celluloseestern und -ethern, Alkyl- und Acrylestern, Polyimiden, Polyurethanen oder Polyestern oder aus hitzehärtbaren Harzen wie Epoxidharzen, Hamstoff/Formaldehyd-, Phenol/Formaidehyd- oder Melamin/Formaldehyd-Harzen oder aus synthetischen Kautschuken bestehen.

Als Lösungsmittel für den Klebstoff eigenen sich z. B. Kohlenwasserstoffe wie Ligroin und Toluol, Ester wie Ethylacetat oder Ketone wie Aceton und Methylethylketon.

Überraschend war insbesondere, dass trotz der erfindungsgemäß niedrigen PEN-Gehalte auch Verbunde mit dünnen PET/PEN-Copolymerfolien (z. B. 12 $\mu$m) das Füllgut so gut vor dem Verderben unter UV-Licht schützen, dass Verlängerungen der Shelflife von über 100 % auch ohne die Verwendung von zusätzlichen UV-Absorbern möglich sind.

Die Erfindung wird im folgenden anhand von Ausführungsbeispielen näher erläutert.

Die Messung der einzelnen Eigenschaften erfolgte dabei gemäß der folgenden Normen bzw. Verfahren:

**Messmethoden**

Aschegehalt

Der Aschegehalt einer Folie oder eines PET-Rohstoffes spiegelt den Pigmentgehalt bzw. auch den Gehalt an eventuell vorhandenen mineralischen Verschmutzungen wieder. Die Asche-Bestimmung von PET-Granulat und -Folien erfolgt in Anlehnung an die Prüfnormen DIN 53568 (1974 bzw. 1978) und DIN 3451 (1991).
Ca. 10 g PET-Chips oder zerkleinerte Folie werden auf einer Analysenwaage (Fa. Sartorius (200 g)) mit einer Genauigkeit von +/- 0,5 mg in einen konstant vorgeglühten, über Phosphorpentoxid gelagerten Porzellantiegel (hohe Form, 102/60) eingewogen. Der Tiegel wird in einen Schnellverascher (Fa. Gestigkeit, Typ SVD 95) gestellt und die Probe vorverascht. Dabei gelten folgende Einstellungen und Zeiten:

Dauer:  30 bis 40 min bei 600 °C und anschließend
          30 bis 40 min bei 700 °C

Anschließend werden die Tiegel 3 h bzw. bis zur Gewichtskonstanz in einem Muffelofen (Fa. Heraeus K 1252) bei 600 °C geglüht.
Die Tiegel werden zum Abkühlen in einen Exsikkator mit Phosphorpentoxid-Füllung (Sicapent) überführt, auf Raumtemperatur abgekühlt und dann ausgewogen.
Es werden immer Doppelbestimmungen durchgeführt; bei großen Abweichungen wird eine dritte Messung durchgeführt.
Ermittlung des Asche-Gehaltes:

$$\text{Asche (\%)} = \text{(Auswaage x 100) / Einwaage}$$

Oberflächengasströmungszeit

Das Prinzip des Messverfahrens basiert auf der Luftströmung zwischen einer Folienseite und einer glatten Silizium-Wafer-Platte. Die Luft strömt von der Umgebung in einen evakuierten Raum, wobei die Grenzfläche zwischen Folie und Silizium-Wafer-Platte als Strömungswiderstand dient.
Eine runde Folienprobe wird auf einer Silizium-Wafer-Platte, in deren Mitte eine Bohrung die Verbindung zu dem Rezipienten gewährleistet, gelegt. Der Rezipient wird auf einen Druck kleiner 0,1 mbar evakuiert. Bestimmt wird die Zeit in Sekunden, die die Luft benötigt, um in dem Rezeptienten einen Druckanstieg von 56 mbar zu bewirken.

Messbedingungen:

| | |
|---|---|
| Messfläche | 45,1 cm$^2$ |
| Anpressgewicht | 1276 g |
| Lufttemperatur | 23 °C |
| Luftfeuchte | 50 % relative Feuchte |
| Gassammelvolumen | 1,2 cm$^3$ |
| Druckintervall | 56 mbar |

Lichttransmission

Unter der Lichttransmission ist das Verhältnis des insgesamt durchgelassenen Lichtes zur einfallenden Lichtmenge zu verstehen.
Die Lichttransmission wird mit dem Messgerät "Hazegard plus" nach ASTM D1003 gemessen.

SV (DCE), IV (DCE)

Die Standardviskosität SV (DCE) wird, angelehnt an DIN 53726, bei 25 °C in Dichloressigsäure gemessen.

Die intrinsische Viskosität (IV) berechnet sich wie folgt aus der Standardviskosität:

$$IV \, (DCE) = [\eta] = 6{,}907 \cdot 10^{-4} \, SV \, (DCE) + 0{,}063096 \, [dl/g]$$

Gelbwert

Der Gelbwert G ist die Abweichung von der Farblosigkeit in Richtung "Gelb" und wird gemäß DIN 6167 gemessen. Gelbwert G-Werte von < 5 sind visuell nicht sichtbar.

Glanz

Der Glanz wurde nach DIN 67 530 bei einem Messwinkel von 20° bestimmt. Gemessen wurde der Reflektorwert als optische Kenngröße für die Oberfläche einer Folie. Ein Lichtstrahl trifft unter dem eingestellten Einstrahlwinkel auf die ebene Prüffläche und wird von dieser reflektiert bzw. gestreut. Die auf den photoelektronischen Empfänger auffallenden Lichtstrahlen werden als proportionale elektrische Größe angezeigt. Der Messwert ist dimensionslos und muss mit dem Einstrahlwinkel angegeben werden.

Rauigkeit

Die Rauigkeit $R_a$ der Folie wurde nach DIN 4768 bei einem Cut-off von 0,25 mm bestimmt.

Schmelzpeak

Die Glasübergangstemperatur $T_g$ wurde anhand von Folienproben mit Hilfe der DSC (Differential Scanning Calorimetry) bestimmt (DIN 73 765). Verwendet wurde ein DSC 1090 der Fa. DuPont. Die Aufheizgeschwindigkeit betrug 20 K/min und die Einwaage ca. 12 mg. Im ersten Aufheizvorgang wurde der Schmelzpeak ermittelt. Als Schmelzpeak wird dabei das Maximum des größten endothermen Peaks zwischen 180 und 270 °C gewertet.

Sauerstoffbarriere

Die Messung der Sauerstoffbarriere erfolgte mit einem OX-TRAN 2/20 von Mocon Modern Controls (USA) entsprechend DIN 53 380, Teil 3.

Shelflife

Je 200 g gekochter Schinken in 2,5 mm dicken Scheiben des Durchmessers 10 cm werden in der Verbundverpackung mit der erfindungsgemäßen Folie plaziert und diese anschließend verschlossen. Eine zweite Verbundverpackung des gleichen Typs, aber unter Verwendung einer handelsüblichen PET-Folie gleicher Dicke (hier RNK von Mitsubishi Polyester Film Europe GmbH) wird ebenso gefüllt. Je drei Verpackungen des UV-geschützten erfindungsgemäßen Verbundes und je drei Verpackungen mit der handelsüblichen PET-Folie werden anschließend in eine offene Kühltruhe mit der Temperatur +3 °C verbracht. 1 m über den Verpackungen (Seite mit erfindungsgemäßer Folie oben) sind 5 handelsübliche Neonröhren des Typs Phillips TL20W/05 angebracht. Die Verpackungen werden täglich auf sichtbare Verfärbungen überprüft (visuell). Die Zeit bis zum Auftreten von Verfärbungen wird notiert, und der Mittelwert (in Stunden) der Verpackungen aus handelsüblicher PET-Folie wird 100 % gesetzt. Die prozentuale Abweichung der erfindungsgemäßen Verpackungen von diesem Wert wird berechnet, indem der Mittelwert (in Stunden), bis an diesen Verpackungen Verfärbungen auftreten, durch den Mittelwert der Verpackungen aus handelsüblicher PET-Folie geteilt wird und mit 100 multipliziert wird. Von dem Ergebnis werden 100 abgezogen.

Bei nachstehenden Beispielen und Vergleichsbeispielen handelt es sich jeweils um einschichtige, transparente Folien unterschiedlicher Dicke.

Folienherstellung

Thermoplast-Chips für die Basisschicht B wurden gemäß den in den Beispielen angegebenen Verhältnissen gemischt und in einem Wirbelschichttrockner bei 155 °C für 1 min vorkristallisiert, anschließend für 3 h in einem Schachttrockner bei 150 °C getrocknet und bei 290 °C in einem Einschneckenextruder aufgeschmolzen. Die Thermoplast-Chips für die Deckschichten A bzw. C wurden gemäß den in den Beispielen angegebenen Verhältnissen gemischt und in einem Zweischneckenextruder bei 290 °C extrudiert. Die geschmolzenen Polymerstränge wurden in einer Koextrusionsdüse zusammengeführt und über eine Abzugswalze abgezogen. Der Film wurde um den Faktor 4,0 in Maschinenrichtung bei 116 °C gestreckt und in einem Rahmen bei 110 °C eine Querstreckung um den Faktor 3,9 durchgeführt. Anschließend wurde die Folie bei 225 °C thermofixiert und in Querrichtung um 2 % bei Temperaturen von 200 bis 180 °C relaxiert

Verbundherstellung

Aus den Folien aus den Beispielen werden jeweils drei verschiedene Verbunde gefertigt. Der Verbund wird für die Messung der Shelflife auf einen handelsüblichen A-PET-Tray als Unterlage (dem UV-Licht abgewandte Seite) gesiegelt.

Verbund A

Verbundfolie mit PE

Die Folie aus dem Beispiel wird mit einem Kleber (Adcote® 700 A+C der Firma Rohm&Haas, Deutschland) beschichtet, so dass die gebildete Klebstoffschicht 0,5 g/m$^2$ wiegt. Anschließend wird eine 40 μm dicke Folie aus Polyethylen niedriger Dichte (Buklin® 40 μm der Firma B&K, Deutschland) auf die mit Kleber (Verankerungsmittel) beschichtete Folie aus dem Beispiel aufkaschiert.

Verbund B

Verbundfolie mit PP

Die Folie aus dem Beispiel wird mit einem Kleber (Adcote 700 A+C der Firma Rohm&Haas, Deutschland) beschichtet, so dass die gebildete Klebstoffschicht 0,5 g/m$^2$ wiegt. Anschließend wird eine 30 μm dicke Siegelfolie aus Polypropylen (GND 30 der Firma Trespaphan, Deutschland) auf die mit Kleber (Verankerungsmittel) beschichtete Folie aus dem Beispiel aufkaschiert.

Verbund C

Verbundfolie mit PET

Die Folie aus dem Beispiel wird mit einem Kleber (Adcote 700 A+C der Firma Rohm&Haas, Deutschland) beschichtet, so dass die gebildete Klebstoffschicht 0,5 g/m$^2$ wiegt. Anschließend wird eine 20 μm dicke Siegelfolie aus PET, die biaxial orientiert ist (Hostaphan® RHS 20 der Fa. Mitsubishi Polyester Film GmbH, Wiesbaden, Deutschland), auf die mit Kleber (Verankerungsmittel) beschichtete Folie aus dem Beispiel aufkaschiert. Im Fall der siegelfähigen erfindungsgemäßen Folie ersetzt diese das RHS als Siegelfolie. Als PET-Folie dient in diesem Fall RNK 12 (Mitsubishi Polyester Film GmbH, Wiesbaden, Deutschland)

**Beispiele**

Als Vergleich für die Verbesserung der Shelflife dienten handelsübliche Verpackungsfolien der Firma Mitsubishi Polyester Film GmbH (Wiesbaden, Deutschland).

Beispiel 1

Es wurde eine 23 μm dicke, transparente, einseitig siegelfähige Folie hergestellt. Die Basisschicht ist 19 mm dick und die Deckschichten A und C sind jeweils 2 μm dick.

Rohstoffmischung Basisschicht B:

| | | |
|---|---|---|
| R1: | PET-Rohstoff RT49 (KoSa, Offenbach, Deutschland), SV = 800 | 50 Gew.-% |
| R2: | PET/PEN-Folienregenerat mit 10 Gew.-% PEN-Anteil, SV = 700, IPA-Anteil = 4 Gew.-% | 50 Gew.-% |

Rohstoffmischung siegelfähige Deckschicht A:

| R3: | PET-Rohstoff, SV = 800, enthält 5000 ppm Sylysia 320 (Fuji Japan; $d_{50}$ = 2,4 $\mu$m) und 7000 ppm Aerosil TT600 (Degussa/Deutschland) | 1 Gew.-% |
|---|---|---|
| R4: | PET-Rohstoff SV = 800, mit 70 Mol.-% Ethylenterephthalat und 30 Mol.-% Ethylenisophthalat | 69 Gew.-% |
| R5: | 100 Gew.-% PEN, SV=650 | 10 Gew.-% |
| R2: | s.o. | 20 Gew.-% |

Rohstoffmischung Deckschicht C:

| R1: | s.o. | 85 Gew.-% |
|---|---|---|
| R3: | s.o. | 15 Gew.-% |

Sauerstoffbarriere = 49 {cm$^3$/(m$^2$·d· bar)}·{23 $\mu$m/12 $\mu$m}
Shelflife-Anstieg in % im Vergleich zu einem analogen Verbund mit der Folie RHS 23 (Mitsubishi Polyester Film GmbH, Wiesbaden, Deutschland):

| Verbund A: | 53 % |
|---|---|
| Verbund B: | 60 % |
| Verbund C: | 30 % |

Beispiel 2

Es wurde eine 12 $\mu$m dicke, transparente, einseitig matte Folie hergestellt. Die Basisschicht ist 9 mm dick und die Deckschichten A und C sind jeweils 1,5 $\mu$m dick.

Rohstoffmischung Basisschicht B:

| R1: | PET-Rohstoff RT49 (KoSa, Offenbach, Deutschland), SV = 800 | 42 Gew.-% |
|---|---|---|
| R6: | PET/PEN-Folienregenerat mit 10 Gew.% PEN-Anteil, SV = 700, Asche = 0,1 Gew.% | 50 Gew.-% |
| R5: | s.o. | 8 Gew.-% |

Rohstoffmischung matte Deckschicht A:

| R3: | s.o. | 2 Gew.-% |
|---|---|---|
| R7: | PET-Rohstoff, SV = 800, mit 95 Mol.-% Ethylenterephthalat und 5 Mol-% Ethylenisophthalat und 50.000 ppm Sylobloc CP4 -8191 (Grace Deutschland), $d_{50}$=7 $\mu$m | 98 Gew.-% |

Rohstoffmischung Deckschicht C:

| R1: | s.o. | 95 Gew.-% |
|---|---|---|
| R3: | s.o. | 5 Gew.-% |

Sauerstoffbarriere = 93 {cm$^3$/(m$^2$·d·bar)}·{12 $\mu$m/12 $\mu$m}

Shelflife-Anstieg in % im Vergleich zu einem analogen Verbund mit der Folie MP 12 (Mitsubishi Polyester Film GmbH, Wiesbaden, Deutschland):

| | |
|---|---|
| Verbund A: | 95 % |
| Verbund B: | 95 % |
| Verbund C: | 55 % |
| Rauheit Seite A: | $R_a$ = 400 nm |
| Rauheit Seite C: | $R_a$ = 60 nm |
| Gasströmzeit Seite A: | 35 s |

Beispiel 3

Es wurde eine 12 $\mu$m dicke, transparente, einseitig hochglänzende Folie hergestellt. Die Basisschicht ist 9 mm dick und die Deckschichten A und C sind jeweils 1,5 $\mu$m dick.

Rohstoffmischung Basisschicht B:

| R1: | PET-Rohstoff RT49, SV = 800 | 41 Gew.-% |
|---|---|---|
| R6: | PET/PEN-Folienregenerat mit 10 Gew.-% PEN-Anteil, SV = 700, Asche 0,1 Gew.-% | 50 Gew.-% |
| R5: | s.o. | 9 Gew.-% |

Rohstoffmischung glänzende Deckschicht A:

| R3: | s.o. | 0,4 Gew.-% |
|---|---|---|
| R1: | s.o. | 99,6 Gew.-% |

Rohstoffmischung Deckschicht C:

| R1: | s.o. | 93 Gew.-% |
|---|---|---|
| R3: | s.o. | 7 Gew.% |

Sauerstoffbarriere = 92 {cm$^3$/(m$^2$·d·bar)}·{12 $\mu$m/12 $\mu$m}
Shelflife-Anstieg in % im Vergleich zu einem analogen Verbund mit der Folie MP 12 (Mitsubishi Polyester Film GmbH, Wiesbaden, Deutschland):

| | |
|---|---|
| Verbund A: | 95 % |
| Verbund B: | 95 % |
| Verbund C: | 55 % |
| Glanz Seite A: | 210 |
| Rauheit Seite A: | $R_a$ = 37 nm |
| Rauheit Seite C: | $R_a$ = 65 nm |

Beispiel 4:

Es wurde eine 12 $\mu$m dicke, transparente, beidseitig antischlupf-ausgerüstete Folie hergestellt. Die Basisschicht ist 9 $\mu$m dick und die Deckschichten A und C sind jeweils 1,5 $\mu$m dick.

Rohstoffmischung Basisschicht B:

|     |                                                                          |          |
|-----|--------------------------------------------------------------------------|----------|
| R1: | PET-Rohstoff RT49, SV = 800                                              | 41 Gew.-% |
| R6: | PET/PEN-Folienregenerat mit 10 Gew.-% PEN-Anteil, SV = 700, Asche 0,1 Gew.-% | 50 Gew.-% |
| R5: | s.o.                                                                     | 9 Gew.-% |

Rohstoffmischung Deckschicht A:

|     |      |          |
|-----|------|----------|
| R3: | s.o. | 7 Gew.-% |
| R1: | s.o. | 93 Gew.-% |

Rohstoffmischung Deckschicht C:

|     |      |          |
|-----|------|----------|
| R1: | s.o. | 93 Gew.-% |
| R3: | s.o. | 7 Gew.-% |

Sauerstoffbarriere = 93 $\{cm^3/(m^2{\cdot}d{\cdot}bar)\}{\cdot}\{12\,\mu m/12\,\mu m\}$

Shelflife-Anstieg in % im Vergleich zu einem analogen Verbund mit der Folie MP 12 (Mitsubishi Polyester Film GmbH, Wiesbaden, Deutschland):

|                          |                          |
|--------------------------|--------------------------|
| Verbund A:               | 85 %                     |
| Verbund B:               | 75 %                     |
| Verbund C:               | 50 %                     |
| Glanz Seite A:           | 210                      |
| Rauheit Seiten A und C:  | $R_a$ = 67 +/- 5 nm      |
| Gasströmzeit Seiten A und C: | 210 s +/- 70 s       |

**Patentansprüche**

**1.** Mindestens zweischichtige Polyesterfolie mit einer Gesamtdicke von 5 bis 200 $\mu m$, die - bezogen auf die Masse der Gesamtfolie - neben Polyethylenterephthalat 2 bis 20 Gew.-% Polyethylennaphthalat enthält, wobei der Polyethylennaphthalat-Gehalt in jeder Schicht einen Gehalt von 25 Gew.-% nicht überschreitet sowie mindestens eine funktionelle Außenschicht, wobei die funktionelle Außenschicht oder die funktionellen Außenschichten eine zusätzliche Funktionalität aufweist/aufweisen, die ausgewählt ist aus: siegelfähig, matt, glänzend, antiblock.

**2.** Folie nach Anspruch 1, **dadurch gekennzeichnet, dass** sie einen Schmelzpeak zwischen 230 und 270 °C aufweist.

**3.** Folie nach Anspruch 1 oder 2, **dadurch gekennzeichnet, dass** die Polyethylennaphthalat-Konzentration bei mindestens 5 Gew.-% liegt (bezogen auf die Masse der Gesamtfolie).

**4.** Folie nach einem der Ansprüche 1 bis 3, **dadurch gekennzeichnet, dass** sie 0,5 bis 2,5 Gew.-% Isophthalsäure (IPA) enthält (bezogen auf die Masse der Gesamtfolie).

**5.** Folie nach einem der Ansprüche 1 bis 4, **dadurch gekennzeichnet, dass** sie aufgebaut ist aus einer Polyethylennaphthalat-haltigen Basisschicht (B) und einer funktionellen Außenschicht (A).

**6.** Folie nach einem der Ansprüche 1 bis 4, **dadurch gekennzeichnet, dass** sie aufgebaut ist aus einer Polyethylennaphthalat-haltigen Basisschicht (B) und zwei funktionellen Außenschichten (A) und (A) oder (A) und (A').

**7.** Folie nach einem der Ansprüche 1 bis 4, **dadurch gekennzeichnet, dass** sie aufgebaut ist aus einer Polyethylennaphthalat-haltigen Basisschicht (B) und einer funktionellen Außenschicht (A) und einer weiteren Außenschicht (C) auf der (A) gegenüberliegenden Seite der Basisschicht.

**8.** Verfahren zur Herstellung einer Folie nach Anspruch 1, wobei die den einzelnen Schichten der Folie entsprechenden Schmelzen durch eine Flachdüse koextrudiert werden, die so erhaltene Vorfolie zur Verfestigung auf einer oder mehreren Walze/n abgezogen wird, die Vorfolie anschließend biaxial gestreckt (orientiert), die biaxial gestreckte Folie thermofixiert und gegebenenfalls an der zur Behandlung vorgesehenen Oberflächenschicht corona- oder flammbehandelt wird.

**9.** Verpackungsverbund aus einer Folie nach Anspruch 1 und einer weiteren Folie.

**10.** Verpackungsverbund nach Anspruch 9, **dadurch gekennzeichnet, dass** die weitere Folie Polyesterfolie, Polyamidfolie, Polyethylenfolie oder Polypropylenfolie ist.

**11.** Verwendung der Folie nach Anspruch 1 zur Herstellung von Verpackungsverbunden.

**Claims**

**1.** An at least two-layer polyester film with a total thickness of from 5 to 200 $\mu$m which - based on the weight of the entire film - besides polyethylene terephthalate comprises from 2 to 20 % by weight of polyethylene naphthalate where the content of polyethylene naphthalate in each layer does not exceed 25 % by weight, and also comprises at least one functional outer layer, where the functional outer layer(s) has/have an additional functionality selected from: sealable, matt, glossy, antiblocking.

**2.** The film as claimed in claim 1, which has a melting peak at from 230 to 270 °C.

**3.** The film as claimed in claim 1 or 2, wherein the polyethylene naphthalate concentration is at least 5 % by weight (based on the weight of the entire film).

**4.** The film as claimed in any of claims 1 to 3, which comprises from 0.5 to 2.5 % by weight of isophthalic acid (IPA) (based on the weight of the entire film).

**5.** The film as claimed in any of claims 1 to 4, which is composed of a polyethylene-naphthalate-containing base layer (B) and of a functional outer layer (A).

**6.** The film as claimed in any of claims 1 to 4, which is composed of a polyethylene-naphthalate-containing base layer (B) and of two functional outer layers (A) and (A), or (A) and (A').

**7.** The film as claimed in any of claims 1 to 4, which is composed of a polyethylene-naphthalate-containing base layer (B) and of a functional outer layer (A) and of another outer layer (C) on that side of the base layer opposite to (A).

**8.** A process for producing a film as claimed in claim 1, where the melts corresponding to each of the layers of the film are coextruded through a flat-film die, the resultant prefilm is drawn off for solidification on one or more rolls, the prefilm is then biaxially stretched (oriented), and the biaxially stretched film is heat-set and, where appropriate, corona- or flame-treated on the surface layer intended for treatment.

**9.** A packaging composite made from a film as claimed in claim 1 and from another film.

**10.** The packaging composite as claimed in claim 9, wherein the other film is a polyester film, a polyamide film, a polyethylene film, or a polypropylene film.

**11.** The use of the film as claimed in claim 1 for producing packaging composites.

**Revendications**

**1.** Film de polyester au moins bicouche, ayant une épaisseur totale de 5 à 200 $\mu$m, qui contient, outre du poly(éthylène-téréphtalate) - par rapport à la masse du film dans son ensemble - de 2 à 20 % en poids de poly(éthylène-naphtalate), la teneur en poly(éthylène-naphtalate de chaque couche n'excédant pas une teneur de 25 % en poids, ainsi qu'au moins une couche externe fonctionnelle, cette couche externe fonctionnelle ou ces couches externes fonctionnelles présentant une fonctionnalité supplémentaire qui est choisie parmi : soudabilité, matité, brillant, propriété anti-adhérence de contact.

**2.** Film selon la revendication 1, **caractérisé en ce qu'**il présente un pic de fusion compris entre 230 et 270 °C.

**3.** Film selon la revendication 1 ou 2, **caractérisé en ce que** la concentration de poly(éthylène-naphtalate) est d'au moins 5 % en poids (par rapport à la masse du film dans son ensemble).

**4.** Film selon l'une quelconque des revendications 1 à 3, **caractérisé en ce qu'**il contient de 0,5 à 2,5 % en poids d'acide isophtalique (IPA) (par rapport à la masse du film dans son ensemble).

**5.** Film selon l'une quelconque des revendications 1 à 4, **caractérisé en ce qu'**il est constitué d'une couche de base (B) contenant du poly(éthylène-naphtalate) et d'une couche externe (A) fonctionnelle.

**6.** Film selon l'une quelconque des revendications 1 à 4, **caractérisé en ce qu'**il est constitué d'une couche de base (B) contenant du poly(éthylène-naphtalate) et de deux couches fonctionnelles (A) et (A) ou (A) et (A').

**7.** Film selon l'une quelconque des revendications 1 à 4, **caractérisé en ce qu'**il est constitué d'une couche de base (B) contenant du poly(éthylène-naphtalate) et d'une couche externe (A) fonctionnelle et d'une autre couche externe (C) sur la face (A) opposée de la couche de base.

**8.** Procédé pour la fabrication d'un film selon la revendication 1, dans lequel les masses fondues correspondant aux couches individuelles du film sont coextrudées à travers une filière plate, le préfilm ainsi obtenu est tiré pour la solidification sur un ou plusieurs cylindres, le préfilm est ensuite étiré (orienté) biaxialement, le film étiré biaxialement est thermofixé et éventuellement traité à la flamme ou par corona sur la couche superficielle prévue pour le traitement.

**9.** Emballage composite à base d'un film selon la revendication 1 et d'un autre film.

**10.** Emballage composite selon la revendication 9, **caractérisée en ce que** l'autre film est un film de polyester, un film de polyamide, un film de polyéthylène ou un film de polypropylène.

**11.** Utilisation du film selon la revendication 1, pour la fabrication d'un emballage composite.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19720505 A
- WO 0196114 A
- GB 2344596 A

- EP 0144878 A
- DE 3300411 A
- DE 2644209 A